# EUROPÄISCHE PATENTANMELDUNG

(11) **EP 1 681 421 A2**
(43) Veröffentlichungstag der Anmeldung: **19.07.2006**
(21) Anmeldenummer: 05026952.1
(22) Anmeldetag: 09.12.2005
(51) Int. Cl.: E05F 3/22

(54) **Gleitschiene für einen Türschliesser oder dergleichen**

(30) Priorität: 13.01.2005 DE 102005001803
(71) Anmelder: DORMA GMBH & CO. KG, 58256 Ennepetal (DE)
(72) Erfinder: Hellwig, Alexander, 58256 Ennepetal (DE)

(57) **Zusammenfassung**

Die Erfindung betrifft eine Gleitschiene für einen Türschließer oder dergleichen mit einer Führungsschiene (2) zur Führung eines Gleitstückes. Um eine Gleitschiene zu schaffen, welche leicht an die individuellen Wünsche angepasst werden kann und welche in optischer Hinsicht einen ansprechenderen Eindruck hinterlässt, ist die Führungsschiene (2) mit einem Abdeckelement (3) verkleidbar.

## Beschreibung

Die Erfindung betrifft eine Gleitschiene für einen Türschließer oder dergleichen mit einer Führungsschiene zur Führung eines Gleitstückes gemäß der Hauptanmeldung DE 10 2004 012 638.0.

Solche Gleitschienen sind hinlänglich bekannt. Sie lassen sich nur bedingt an die individuellen Wünsche der Kunden anpassen und sind in aller Regel optisch wenig ansprechend.

Die Aufgabe der vorliegenden Erfindung besteht deshalb darin, eine Gleitschiene zu schaffen, welche leicht an die individuellen Wünsche angepasst werden kann und welche in optischer Hinsicht einen ansprechenderen Eindruck hinterlässt.

Gelöst wird diese Aufgabe durch die im Patentanspruch 1 angegebenen Merkmale. Vorteilhafte Ausgestaltungen der Gleitschiene ergeben sich aus den Unteransprüchen.

Die Erfindung gemäß dem Patentanspruch 1 zeichnet sich dadurch aus, dass ein Abdeckelement die Führungsschiene ausschließlich frontseitig flächig abdeckt und in Längserstreckung beidseitig je einen Klemmrand aufweist. Hierdurch wird vermieden, dass etwaige Aussparungen, insbesondere für einen Gleitkanal, in eine sonst vorhandene seitliche Verkleidungsfläche des Abdeckelementes eingebracht werden müssen. Die diesbezüglichen Stanz- oder Fräsarbeiten entfallen.

Da das Abdeckelement somit unabhängig von seitlichen Aussparungen ist, muss es nur abgelängt werden und kann variabel für alle Längen verwendet werden. Es kann gegebenenfalls auch verschoben werden. Die beiden Stirnseiten des Abdeckelementes werden mit entsprechenden Endkappen verschlossen.

Gegenüber einer Vollverkleidung bestehend aus Front- und Seitenverkleidung wird wesentlich weniger Material benötigt. Vorteilhafterweise wird das Abdeckelement symmetrisch ausgebildet, so dass sich entsprechende Fertigungsvorteile und Montagevereinfachungen ergeben. Um eine ausreichende Verwindungssteifigkeit zu erzielen, ist die Abdeckung vorteilhafterweise als Strangpressprofil ausgebildet.

Die Befestigung des Abdeckelementes erfolgt durch kurze seitliche, einwärts gerichtete Klemmränder, die die Führungsschiene klemmend umgreifen. Hierdurch wird ein hinreichend strammer Sitz des Abdeckelementes gewährleistet, so dass auch eine Nachrüstung bestehender Systeme möglich ist. Optional können an den Seitenflächen der Führungsschienen Schrägflächen ausgebildet sein, in die die Klemmränder komplementär eingreifen. Die Klemmränder erhöhen außerdem die Verwindungssteifigkeit des Abdeckelementes.

Infolge dieser vorteilhaften Ausgestaltung ergibt sich eine Gleitschiene, welche in optischer Hinsicht außerordentlich ansprechend wirkt und welche auch leicht und einfach an individuelle Wünsche angepasst werden kann. Selbst im bereits eingebauten Zustand kann ein Abdeckelement gegen ein anderes ausgetauscht werden, so dass auch einem geänderten Geschmack Rechnung getragen werden kann.

Bei der Verwendung eines derartigen Abdeckelementes an einer doppelflügeligen Tür mit Gleitschienensystem tritt in besonderer Weise die ununterbrochene über die gesamte Breite der Türanlage einheitliche Gesamtfront hervor.

Die Abdeckung wird in unterschiedlichen Farben und Dekoren erstellt. Optional kann die Oberfläche auch profiliert oder gemustert ausgebildet sein. Darüber hinaus kann das Abdeckelement auch als Informationsträger genutzt werden, in dem es entsprechend beschriftet oder farblich gestaltet ist. Vorteilhafterweise erfolgt diese Gestaltung durch nachträglich aufbringbare Materialien.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:

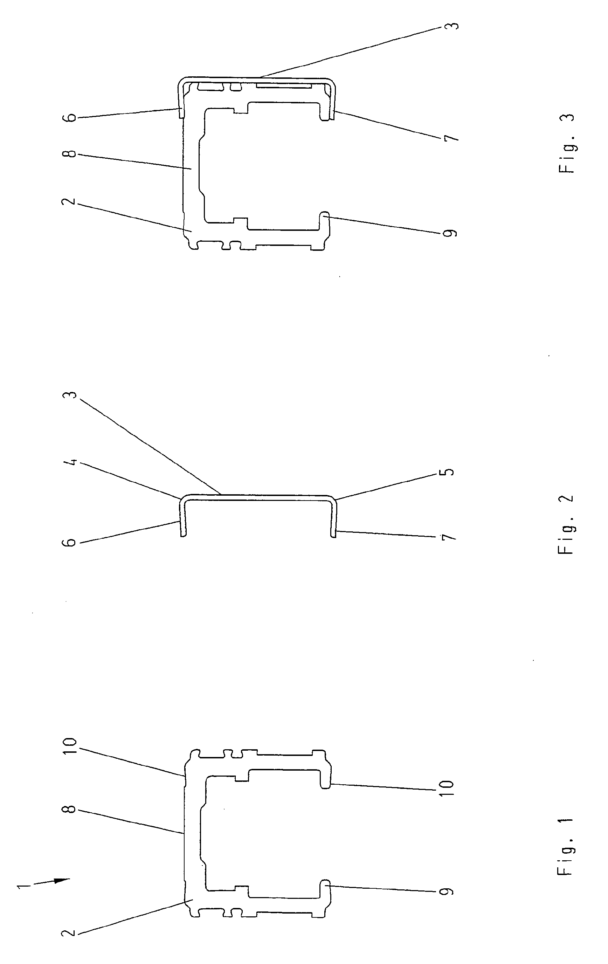

- Figur 1:: Einen Querschnitt durch eine Führungsschiene.
- Figur 2:: Einen Querschnitt durch ein Abdeckelement.
- Figur 3:: Einen Querschnitt durch die Führungsschiene mit montiertem Abdeckelement.

Gleiche oder gleichwirkende Bauteile sind in der nachfolgenden Beschreibung mit gleichen Bezugszeichen versehen.

In den Figuren sind nur die relevanten Bauelemente dargestellt, alle anderen Konstruktionselemente sind zur besseren Übersichtlichkeit weggelassen worden.

Eine Gleitschiene 1 besteht aus einer C-förmigen Führungsschiene 2, in welcher ein Gleitstück verschiebbar geführt ist, das an einer offenen Seitenfläche 9 der Führungsschiene 2 über ein Gestänge mit einem Türschließer oder dergleichen verbunden ist. Die Führungsschiene 2 ist an einer Tür, einem Türrahmen, einer Wand oder dergleichen befestigt.

Die Führungsschiene 2 ist mit einem Abdeckelement 3 verkleidbar, welches an seinen Stirnseiten offen ist. Zur Befestigung des Abdeckelementes 3 an der Führungsschiene 2 sind an den Längskanten 4 und 5 des Abdeckelementes 3 einwärts gerichtete Klemmränder 6 und 7 vorgesehen. Die Klemmränder 6 und 7 werden klemmend auf die Führungsschiene 2 geschoben. Die Länge der Klemmränder 6, 7 beträgt vorzugsweise ca. das 2-fache der Wandstärke der Führungsschiene 2.

In dem dargestellten Ausführungsbeispiel ist in den Seitenflächen 8, 9 der Führungsschiene 2 je eine Schrägfläche 10 ausgebildet, in die die Klemmränder 6, 7 gleiten und so eine zusätzliche sichere Positionierung gewährleisten. Es ist jedoch ausreichend, wenn die Klemmränder 6, 7 klemmend anliegen.

Durch die Verwendung des Abdeckelementes 3 wird ein optisch ansprechender Eindruck geschaffen, da eine vollständig geschlossene Frontansicht entsteht. Eine individuelle Gestaltung des Abdeckelementes 3 kann in Anpassung an das Gehäuse des Türschließers erfolgen. Die Abdeckelemente sind in Farbe, Material und Oberflächengestaltung variierbar.

Die vorstehende Beschreibung des Ausführungsbeispieles dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Gleitschiene
- 2: Führungsschiene
- 3: Abdeckelement
- 4: Längskante
- 5: Längskante
- 6: Klemmrand
- 7: Klemmrand
- 8: Seitenfläche
- 9: Seitenfläche
- 10: Schrägfläche

## Patentansprüche

1. Gleitschiene für einen Türschließer oder dergleichen mit einer Führungsschiene (2) zur Führung eines Gleitstückes, **dadurch gekennzeichnet, dass** die Führungsschiene (2) mit einem Abdeckelement (3) verkleidbar ist.

2. Gleitschiene nach Patentanspruch 1, **dadurch gekennzeichnet, dass** das Abdeckelement (3) die Führungsschiene (2) ausschließlich frontseitig flächig abdeckt und in Längserstreckung beidseitig je einen Klemmrand (6, 7) aufweist.

3. Gleitschiene nach einem der vorhergehenden Patentansprüche, **dadurch gekennzeichnet, dass** das Abdeckelement (3) klemmend an der Führungsschiene (2) befestigbar ist.

4. Gleitschiene nach einem der vorhergehenden Patentansprüche, **dadurch gekennzeichnet, dass** die Klemmränder (6, 7) einwärts gerichtet ausgebildet sind.

5. Gleitschiene nach einem der vorhergehenden Patentansprüche, **dadurch gekennzeichnet, dass** die Führungsschiene (2) im Querschnitt C-förmig ausgebildet ist und an Seitenflächen (8, 9) Schrägflächen (10) aufweist.

6. Gleitschiene nach einem der vorhergehenden Patentansprüche, **dadurch gekennzeichnet, dass** das Abdeckelement (3) als Strangpressprofil ausgebildet ist.

7. Gleitschiene nach einem der vorhergehenden Patentansprüche, **dadurch gekennzeichnet, dass** das Abdeckelement sich längs über die gesamte Gleitschiene (1) erstreckt.

8. Gleitschiene nach einem der vorhergehenden Patentansprüche, **dadurch gekennzeichnet, dass** das Abdeckelement (3) aus unterschiedlichen Materialien, insbesondere Aluminium, Edelstahl oder Kunststoff, besteht.

9. Gleitschiene nach einem der vorhergehenden Patentansprüche, **dadurch gekennzeichnet, dass** das Abdeckelement (3) eine unterschiedliche Farbgestaltung aufweist.

10. Gleitschiene nach einem der vorhergehenden Patentansprüche, **dadurch gekennzeichnet, dass** das Abdeckelement (3) eine unterschiedliche Oberflächengestaltung aufweist.
